# EUROPÄISCHE PATENTANMELDUNG

(11) **EP 1 445 686 A2**
(43) Veröffentlichungstag der Anmeldung: **11.08.2004**
(21) Anmeldenummer: 04001828.5
(22) Anmeldetag: 28.01.2004
(51) Int. Cl.: G06F 3/00

(54) **HMI-Einrichtung mit einer Computer-Anwenderstation mit einer Schnittstelle zur Übertragung von Kommunikationsdaten**

(30) Priorität: 05.02.2003 DE 10304649
(71) Anmelder: SIEMENS AKTIENGESELLSCHAFT, 80333 München (DE)
(72) Erfinder: Denzlein, Michael, 91056 Erlangen (DE)

(57) **Zusammenfassung**

Die Erfindung betrifft eine HMI-Einrichtung mindestens einer Computer-Anwenderstation (2) zur Bedienung einer technischen Anlage (3), wobei die Computer-Anwenderstation (2) mindestens eine Netzwerkschnittstelle (8) zur Verbindung mit einem externen Datenserver (9, 10) zur Übertragung von Kommunikationsdaten zur Behebung von Störungen der technischen Anlage (3) aufweist.

## Beschreibung

HMI-Einrichtung mit einer Computer-Anwenderstation mit einer Schnittstelle zur Übertragung von Kommunikationsdaten

Die Erfindung betrifft eine HMI-Einrichtung (Operatorpanel, Bedienpanel) mit mindestens einer Computer-Anwenderstation zur Bedienung einer technischen Anlage.

Als Stand der Technik sind HMI-Einrichtungen (Human-Machine-Interface-Einrichtungen) für technische Anlagen (z.B. Fertigungsanlagen, chemische Prozessanlagen etc.) bekannt, bei denen beim Auftreten von erheblichen Störungen die zuständige Bedienperson weiteres Personal mit entsprechendem Expertenwissen herbeiholt, um eine Behebung der Störung zu veranlassen. Bis derartiges zusätzliches Personal am Standort der technischen Anlage eingetroffen ist, kann erhebliche Zeit vergehen, wodurch Stillstandszeiten und wirtschaftlicher Schaden auftreten können.

Der Erfindung liegt die Aufgabe zugrunde, eine HMI-Einrichtung anzubieten, bei der auch erhebliche Störungen innerhalb kurzer Zeit behebbar sind.

Diese Aufgabe wird durch eine HMI-Einrichtung mit den Merkmalen des Patentanspruchs 1 gelöst. Vorteilhafte Ausführungsformen der HMI-Einrichtung werden in den Unteransprüchen 2 bis 8 beschrieben.

Die erfindungsgemäße HMI-Einrichtung ist Bestandteil mindestens einer Computer-Anwenderstation zur Bedienung einer technischen Anlage, wobei die Computer-Anwenderstation mindestens eine Netzwerkschnittstelle zur Verbindung mit einem externen Datenserver zur Übertragung von Kommunikationsdaten, z.B. von Audiodaten und/oder Videodaten, zur Behebung von Störungen der technischen Anlage aufweist. Bei auftretenden technischen Störungen, welche erheblicher Art sind und von der Bedienperson der technischen Anlage nicht kurzfristig selbst behoben werden können, hat die Bedienperson die Möglichkeit, über die Netzwerkschnittstelle eine Verbindung mit einem externen Datenserver herzustellen und auf dort vorhandenes Expertenwissen, insbesondere in Form von anwesenden Experten, zurückzugreifen. Die Bedienperson und der jeweilige Experte können durch Übertragung von Audiodaten kommunizieren. Alternativ oder ergänzend kann durch Übertragung von Videodaten dem ortsfernen und zugeschalteten Experten entsprechendes Bildmaterial z.B. im Zusammenhang mit der jeweiligen Störung übermittelt werden, um Vorschläge zur Behebung der Störung zu ermöglichen.

Die Netzwerkschnittstelle kann dabei als Web-Schnittstelle oder für die Internet-Telefonie geeignete Schnittstelle zur Übertragung von Daten nach unterschiedlichen Datenprotokollen wie z.B. TCP/IP-Datenprotokoll (Transmission Control Protocol/Internet Protocol), SMTP-Datenprotokoll (Simple Mail Transfer Protocol), POP-Datenprotokoll (Post Office Protocol), HTTP-Datenprotokoll (Hypertext Transfer Protocol), NNTP-Datenprotokoll (Network News Transfer Protocol), FTP-Datenprotokoll (File Transfer Protocol) und/oder WAP-Datenprotokoll (Wireless Application Protocol) ausgebildet sein.

So können durch Übermittlung von Videodaten z.B. Fotoaufnahmen von Werkzeugen mit ihrem jeweiligen Verschleißzustand übermittelt werden und dem ortsfernen Experten zur Erteilung von Ratschlägen zur Behebung der jeweiligen Störung vorgelegt werden.

Im Gegensatz zum Stand der Technik kann die Bedienperson der jeweiligen technischen Anlage nun einen ortsfernen Experten zu Rate ziehen, welcher über den externen Datenserver und die vorliegende Netzwerkschnittstelle zugeschaltet ist. Dieser kann nun innerhalb kurzer Zeit Störungen lösen, welche ansonsten durch Herbeiholung von Experten an den jeweiligen Ort der technischen Anlage behoben werden muss. Damit kann die technische Anlage bei vorliegenden erheblichen Störungen innerhalb kurzer Zeit repariert und können Stillstandszeiten und wirtschaftlicher Schaden minimiert werden.

Nach einer vorteilhaften Ausführungsform besitzt die Computer-Anwenderstation mindestens eine weitere Schnittstelle zum Anschluss eines externen Kommunikationsgeräts. Damit kann die Bedienperson vor Ort weitere Kommunikationsdaten an den externen Datenserver und dem dortigen ortsfernen Experten übermitteln. Bei Anschluss eines Head-Sets als Kommunikationsgerät kann die Bedienperson vor Ort im Gespräch mit dem zugeschalteten Experten Informationen austauschen. Die weitere Schnittstelle kann drahtgebunden aber auch drahtlos (z.B. als Funkverbindung) ausgebildet sein. Im letzten Fall kann die Bedienperson sich frei bewegen und sich insbesondere bei großflächigen technischen Anlagen an den Ort der jeweiligen Störung begeben und die dort festgestellten Eindrücke dem zugeschalteten Experten mitteilen.

Bei Verwendung einer (Mini-)Kamera als Kommunikationsgerät kann die Bedienperson auch einzelne Bereiche der technischen Anlage als Stand- oder Filmbilder erfassen und dem zugeschalteten Experten zur Begutachtung, Auswertung und zur Erteilung von Ratschlägen zur Behebung von Störungen übermitteln.

Bei einer Computer-Anwenderstation mit mindestens einem Mikrofon und/oder mindestens einem Lautsprecher kann die Bedienperson direkt mit dem zugeschalteten Experten kommunizieren, wobei Mikrofon und Lautsprecher insbesondere in das Bedienpanel (Operatorpanel) der Computer-Anwenderstation integriert sind.

Gemäß einer weiteren vorteilhaften Ausführungsform kann die Computer-Anwenderstation der technischen Anlage direkt mit mindestens einem weiteren externen Datenserver verbindbar sein. Hierdurch kann auf ein Netzwerk von zwei oder mehreren externen Datenservern zurückgegriffen werden und der jeweilige zugeschaltete Experte kann an einen externen Datenserver Ratschläge von weiteren externen Datenservern und dortigen Experten insbesondere durch Übertragung von Audio-/Videodaten erhalten. Durch Zuschaltung weiterer Datenserver können die Möglichkeiten der Ferndiagnose und der Störungsbehebung aus der Ferne nochmals gesteigert werden.

Vorteilhafterweise kann dabei eine Kommunikation der externen Datenserver untereinander als auch eine Kommunikation der Computer-Anwenderstation mit den einzelnen technischen Anlagen stattfinden. Diese Kommunikationsmöglichkeiten können nach Bedarf genutzt werden, wodurch die Möglichkeiten einer kurzfristigen Störungsbehebung nochmals gesteigert werden.

Die Erfindung ist anhand von Ausführungsbeispielen in den Zeichnungsfiguren näher erläutert. Es zeigen:
- FIG 1: eine erste Ausführungsform einer HMI-Einrichtung (Operatorpanels, Bedienpanels) einer Computer-Anwenderstation einer technischen Anlage,
- FIG 2: eine weitere Ausführungsform einer HMI-Einrichtung einer Computer-Anwenderstation einer technischen Anlage sowie
- FIG 3: eine schematische Darstellung einer Datenübertragung zwischen einer Computer-Anwenderstation und externen Datenquellen.

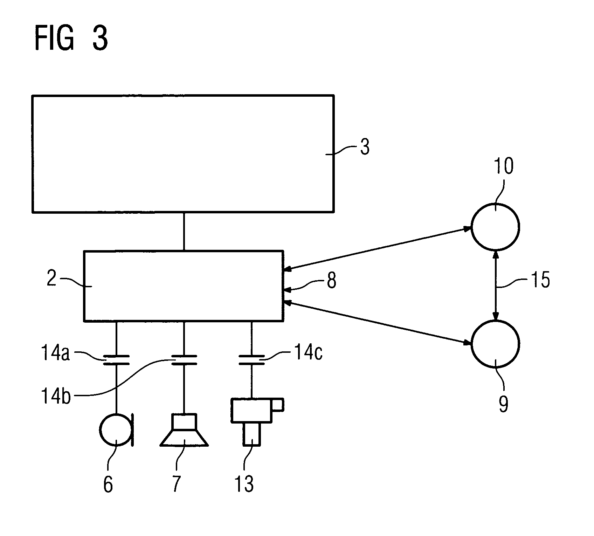

Das Bedienpanel 1 besitzt einen Bildschirm 4 und eine Eingabetastatur 5. Ferner sind ein integriertes Mikrofon 6 und ein integrierter Lautsprecher 7 vorgesehen, über welche die Bedienperson über eine Netzwerkschnittstelle 8 (vgl. FIG 3) mit einem externen Datenserver 9 oder 10 und einem von dort zugeschalteten Experten kommunizieren kann.

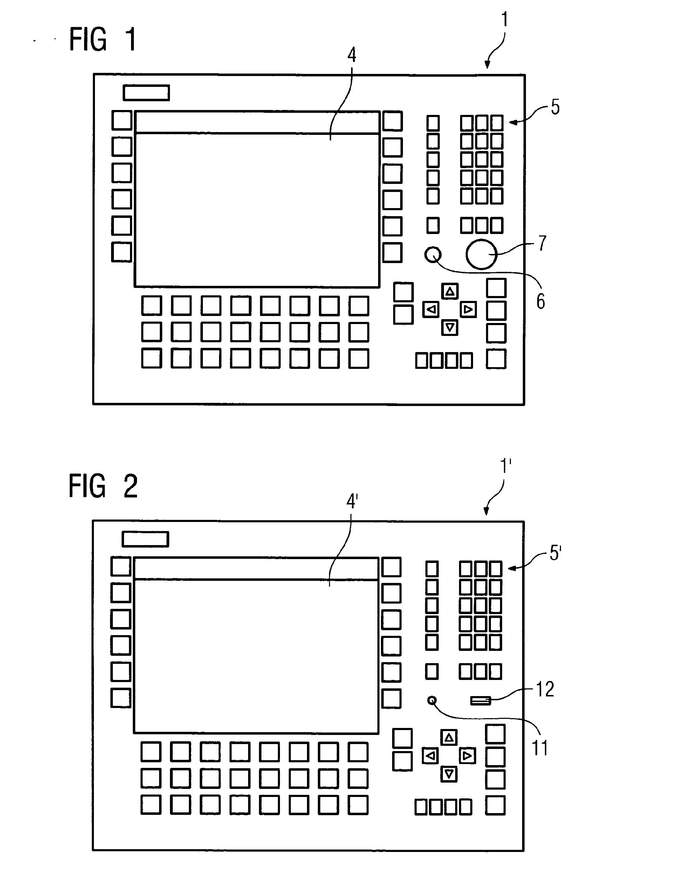

FIG 2 zeigt ein weiteres Bedienpanel 1' mit einem Bildschirm 4' und einer Eingabetastatur 5'. Ferner sind einem integrierten Anschluss 11 für ein Head-Set sowie einem Anschluss 12 für eine Kamera 13 (vgl. FIG 3).

Aus FIG 3 geht in schematischer Darstellung eine technische Anlage 3 hervor, bei der über äußere oder integrierte Schnittstellen 14a, 14b und 14c der Computer-Anwenderstation 2 über die Netzwerkschnittstelle 8 eine Kommunikation einer Bedienperson mit externen Datenservern 9 und 10 stattfinden kann. Die externen Datenservern 9 und 10 können über eine Verbindung 15 auch untereinander kommunizieren.

Insgesamt ermöglicht die erfindungsgemäße die Herstellung einer direkten Kommunikationsverbindung zu einer zentralen Server-Abteilung und einem externen Datenserver 9 oder 10. Hierdurch kann eine zentrale oder mehrere dezentrale Anlaufstellen zur effizienten Diagnose und Behebung von Störungen bei großen technischen Anlagen 3 ermöglicht werden.

Durch Kommunikation der Bedienperson mit den zugeschalteten externen Datenservern 9 und 10 können auch komplexere Störungen zeitnahe behoben werden.

## Patentansprüche

1. HMI-Einrichtung mindestens einer Computer-Anwenderstation (2) zur Bedienung einer technischen Anlage, wobei die Computer-Anwenderstation (2) mindestens eine Netzwerkschnittstelle (8) zur Verbindung mit einem externen Datenserver (9, 10) zur Übertragung von Kommunikationsdaten zur Behebung von Störungen der technischen Anlage (3) aufweist.

2. HMI-Einrichtung nach Anspruch 1, wobei die Computer-Anwenderstation (2) mindestens eine weitere Schnittstelle (14) zum Anschluss externer Kommunikationsgeräte aufweist.

3. HMI-Einrichtung nach Anspruch 2, wobei ein Kommunikationsgerät als Head-Set ausgebildet ist.

4. HMI-Einrichtung nach Anspruch 2 oder 3, wobei ein Kommunikationsgerät als Kamera (13) ausgebildet ist.

5. HMI-Einrichtung nach einem der vorhergehenden Ansprüche, wobei die Computer-Anwenderstation (2) mindestens ein Mikrofon (6) aufweist.

6. HMI-Einrichtung nach einem der vorhergehenden Ansprüche, wobei die Computer-Anwenderstation (2) mindestens einen Lautsprecher (7) aufweist.

7. HMI-Einrichtung nach einem der vorhergehenden Ansprüche, wobei die Computer-Anwenderstation (2) direkt über den externen Datenserver (9) mit mindestens einem weiteren externen Datenserver (10) verbindbar ist.

8. HMI-Einrichtung nach Anspruch 7, wobei die externen Datenserver (9, 10) untereinander in Verbindung stehen.
